# EUROPEAN PATENT APPLICATION

(11) **EP 1 571 690 A1**
(43) Date of publication of application: **07.09.2005**
(21) Application number: 05004421.3
(22) Date of filing: 01.03.2005
(51) Int. Cl.: H01J 31/12

(54) **Field emission display device**

(30) Priority: 05.03.2004 KR 2004015141
(71) Applicant: LG ELECTRONICS INC., Seoul (KR)
(72) Inventor: Moon, Seong Hak, Guro-gu Seoul, 152-774 (KR)
(74) Representative: Rupprecht, Kay

(57) **Abstract**

An FED device comprising at least one gate electrode (310) and an insulation layer (320) sequentially formed on a substrate, at least one cathode electrode (330) positioned on the insulation layer, crossing the at least one gate electrode, and having at least one first groove portion or at least one first protrusion, at least one auxiliary electrode (340) formed parallel to the cathode electrode and having at least one second groove portion or at least one second potrusion, and at least one carbon nano tube (CNT) (350) formed at a boundary portion of the first groove portion of the cathode electrode or on the second protrusion of the cathode electrode. Distortion of electron beams generated from the FED can be minimized, cross talk generated among neighboring cells can be minimized, and luminance of the FED device can be enhanced.

## Description

### BACKGROUND OF THE INVENTION

### 1. Field of the Invention

The present invention relates to a field emission display (FED) and, more particularly, to an FED device.

### 2. Description of the Conventional Art

Recently, demands on displays are increasing according to the rapid development of information communication technologies and the structures of displays are variably changing. For example, in an environment requiring mobility, a mobile information communication device such as a light, small and low power-consuming display is required, while when the display is used as a typical information conveying medium, a display with a large screen such as a CRT (Cathode Ray Tube), an LCD (Liquid Crystal Display), a PDP (Plasma Display Panel), a VFD (Vacuum Fluorescent Display) is required. Thus, the development for FEDs that can provide high resolution as well as having a reduced size and power consumption are being actively pursed.

The FED is receiving attention as a flat panel display for supporting next-generation information communications as it overcomes many shortcomings of currently developed or mass-produced flat panel displays (e.g., LCDs, PDPs, VFDs, etc.,). The FED device has a simple electrode structure, can be operated at high speed such as the CRT, and has the advantage of being able to display a wide variety of colors, gray scale tones and provides high luminance.

Recently, FED devices having carbon nano tubes (CNTs) are being commonly used. The CNT is mechanically strong, chemically stable and has excellent in electron emission characteristics at a low degree of vacuum. By having a relatively small diameter (approximately 1.0~scores of nm), the CNT has a superior field enhancement factor when compared with an emitter having a micro tip, and thus can emit electrons at low turn-on electric fields (approximately 1.0~5.0V/µm). Thus, by applying the CNT to an FED device, a power loss and production unit cost of the FED device can be reduced.

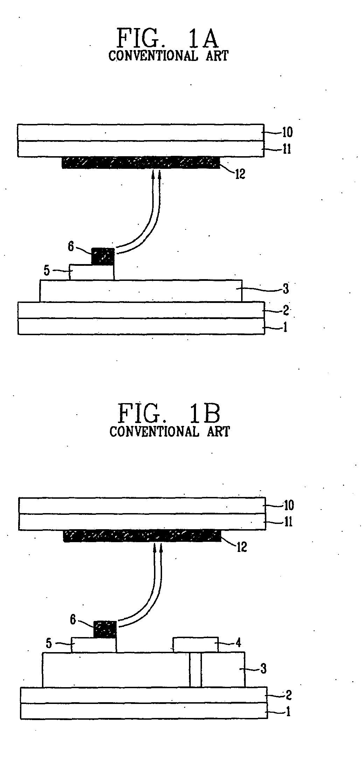

A structure of the FED device having the CNT will now be described with reference to Figures 1A and 1B.

Figure 1A is a sectional view showing the structure of an FED device in accordance with a conventional art.

As shown in Figure 1A, a conventional FED device includes an anode electrode 11 formed on an upper glass substrate 10; a phosphor layer 12 formed on the anode electrode 11; a lower glass substrate 1; a gate electrode 2 formed on the lower glass substrate 1; an insulation layer 3 formed on the gate electrode 2; a cathode electrode 5 formed on the insulation layer 3; and a CNT 6 formed on the cathode electrode 5.

A high voltage is applied to the anode electrode 11 and then a threshold voltage is applied to the gate electrode 2 and the cathode electrode 5. Then, electrons (of an electron beam) generated from an edge of the CNT 6 formed on the cathode electrode 5 are initially bent toward the direction of the gate electrode 2 and are emitted in the direction of the anode electrode 11. The electrons emitted in the direction of the anode electrode 11 are accelerated by the high voltage that has been applied to the anode electrode 11 to collide with the phosphor layer 12 formed on the anode electrode 11. At this time, the phosphor layer 12 is excited by the electron beam to thus emit visible rays therefrom.

The process of the conventional FED device is relatively simple, but in order to drive the FED device, a high voltage must be applied to the gate electrode 2 and the cathode electrode 5, thus increasing overall power consumption. In addition, since electric charges are charged in the insulation layer 3 positioned between the electrodes 2 and 5, electric fields are distorted.

In an effort to reduce power consumption and prevent distortion of electric fields, an FED as shown in Figure 1B has been developed.

Figure 1B is a sectional view showing the structure of a different FED device in accordance with a conventional art.

As shown in Figure 1B, the FED device includes an anode electrode 11 formed on an upper glass substrate 10; a phosphor layer 12 formed on the anode electrode 11; a lower glass substrate 1; a gate electrode 2 formed on the lower glass substrate 1; an insulation layer 3 formed on the gate electrode 2; a cathode electrode 5 formed on the insulation layer 3; a CNT 6 formed on the cathode electrode 5; and a counter electrode 4 connected to the gate electrode 2 exposed through a via hole of the insulation layer 3 and formed on the same plane as the cathode electrode 5.

The FED device of Figure 1B is advantageous in that its driving voltage is low and it has a higher efficiency compared to the FED device of Figure 1A, but since the processing thereof requires a high level of difficulty, its production yield is low and fabrication costs are high. In addition, electric charges are charged/discharged through the surface of the insulation layer 3 exposed between the cathode electrode 5 and the counter electrode 4.

When the surface of the insulation layer 3 is exposed, the charging and discharging phenomenon occurs frequently over time, which cause electric field distortion or emission of abnormal electron beams.

In addition, since the CNT of the FED device of Figures 1A and 1B is exposed at the uppermost layer, abnormal electron beams are easily generated by the anode electric fields, degrading the display quality of the FED device.

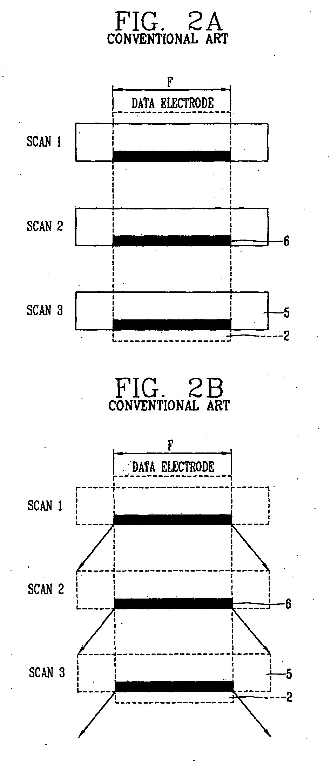

Figures 2A and 2B are plan views for explaining a locus (tracing) of an electron beam generated from the conventional FED device. Especially, Figures 2A and 2B are plan views for explaining a locus (tracing) of an electron beam generated from the FED device of Figure 1A.

As shown in Figure 2A, a CNT 6 with the same length (F) as the gate electrode 2 is generally formed on the cathode electrode (scan electrode) 5 disposed to vertically cross the gate electrode (data electrode) 2. Namely, the length of the CNT of Figure 1A is the same as that of the CNT of Figure 1B.

With reference to Figure 2B, if the CNT 6 is formed to have the same length (F) as that of the gate electrode 2, many electrons are emitted but the electrons (electron beam) spread in left and right direction of the gate electrode 2. Namely, the electrons emitted from the CNT downwardly proceed in the direction of the gate electrode 2, and then are accelerated to the phosphor layer 12 by the high anode electric fields, and because the electrons are mostly emitted from both edges of the CNT 6, the electron beam is undesirably spread at a wide angle. The widely spread electron beam reaches the phosphor layer of adjacent cells, causing problems due to generation of cross talk (interference) and contrast degradation of the displayed image.

As mentioned above, the conventional FED device having the CNT has many problems as follows.

That is, power consumption is high, and as electric charges are charged at the insulation layer 3 positioned between the electrodes 2 and 5, the electric fields are distorted.

In addition, a fabrication process is complicated, fabrication costs are high, and since the distorted electron beam reaches the phosphor layers of neighboring cells, cross talk (interference) occurs among neighboring cells.

Moreover, since the distorted electron beam excites only a portion of the phosphor layer, uniformity of a display screen is degraded.

U.S. Patent Nos. 6,169,372, 6,646,282 and 6,672,926 also disclose various conventional techniques of the FED device.

### SUMMARY OF THE INVENTION

Therefore, one object of the present invention is to provide an FED device capable of preventing distortion of the generated electron beams.

Another object of the present invention is to provide an FED device capable of preventing cross talk (interference) between neighboring cells by concentrating the electron beams into a cell (an FED device).

Still another object of the present invention is to provide an FED device capable of enhancing luminance by concentrating the electron beams into a cell (an FED device.

To achieve these and other advantages and in accordance with the purpose of the present invention, as embodied and broadly described herein, there is provided a field emission display (FED) device including: a gate electrode and an insulation layer sequentially formed on a substrate; a cathode electrode positioned on the insulation layer, crossing the gate electrode, and having a first groove or a first protrusion; an auxiliary electrode formed parallel to the cathode electrode and having a second groove or a second protrusion; and a carbon nano tube (CNT) formed at a boundary portion of the first groove of the cathode electrode or on the second protrusion of the cathode electrode.

To achieve the above objects, there is also provided a field emission display (FED) device including: a gate electrode and an insulation layer sequentially formed on a substrate; a cathode electrode positioned on the insulation layer, crossing the gate electrode, and having a groove portion; an auxiliary electrode formed parallel to the cathode electrode and having an protrusion formed in the groove portion; and a carbon nono tube (CNT) formed at a boundary portion of the groove portion of the cathode electrode, wherein an end portion of the protrusion of the auxiliary electrode has a rectangular or an oval shape and the groove portion of the cathode electrode also has the oval or rectangular shape.

To achieve the above objects, there is also provided an LCD device including: a gate electrode and an insulation layer sequentially formed on a substrate; a cathode electrode positioned on the insulation layer, crossing the gate electrode, and having an protrusion; an auxiliary electrode formed parallel to the cathode electrode and having a groove portion; and a carbon nano tube (CNT) formed on the protrusion of the cathode electrode, wherein an end portion of the protrusion of the cathode electrode has a rectangular or an oval shape and the groove portion of the auxiliary electrode also has the rectangular or oval shape.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1A is a sectional view showing the structure of an FED in accordance with one conventional art;
Figure 1B is a sectional view showing the structure of an FED in accordance with another conventional art;
Figures 2A and 2B are plan views for explaining a locus of an electron beam generated from the FED device in accordance with a conventional art;
Figure 3 is a plan view of an FED (Field Emission Display) device in accordance with a first embodiment of the present invention;
Figure 4 is a plan view of an FED (Field Emission Display) device in accordance with a second embodiment of the present invention;
Figure 5 is a plan view of an FED (Field Emission Display) device in accordance with a third embodiment of the present invention; and
Figure 6 is a plan view of an FED (Field Emission Display) device in accordance with a fourth embodiment of the present invention.

### DETAILED DESCRIPTION OF THE PREFERRED EMBODIMENTS

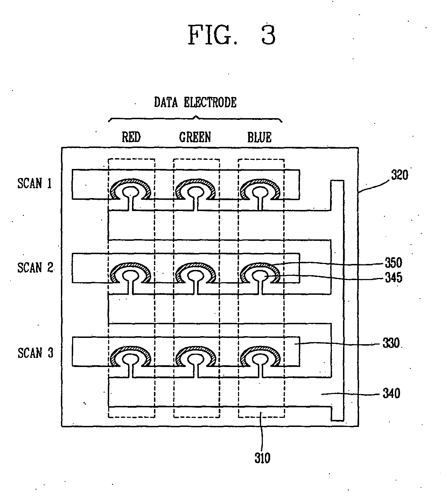

An FED device capable of uniformly maintaining a generated electric field to reduce the spread of electron beams and improve light emitting efficiency and capable of preventing distortion of electron beams by forming a cathode electrode having a groove (or notch) portion or an outrigger (i.e., a type of protrusion), forming an auxiliary electrode having a groove (or notch) portion or an outrigger (protrusion), and forming a CNT (Carbon Nano Tube) at a boundary portion of the groove portion of the cathode electrode or on the outrigger of the cathode electrode, in accordance with preferred embodiments of the present invention, will be further described with reference to Figures 3 to 6.

Figure 3 is a plan view of an FED (Field Emission Display) device in accordance with a first embodiment of the present invention.

In the present invention, an upper glass substrate, an anode electrode and a phosphor layer can be the same as in the conventional art, thus their descriptions will be omitted for the sake of clarity.

As shown in Figure 3, an FED device comprises: at least one gate electrode 310 and an insulation layer 320 sequentially formed on a lower glass substrate (not shown); at least one cathode electrode 330 positioned on the insulation layer 320, crossing the at least one gate electrode 310, and having at least one first groove portion; at least one auxiliary electrode 340 formed parallel to the cathode electrode 330 and having at least one first outrigger 345; and at least one carbon nano tube (CNT) 350 formed at a boundary portion of the first groove portion of the cathode electrode 330.

The first outrigger 345 extends from the auxiliary electrode 340 and is positioned in the first groove portion of the cathode electrode 330.

And end portion of the first outrigger 345 of the auxiliary electrode 340 can have an oval shape and the first groove portion of the cathode electrode 330 also can have a corresponding oval shape in order to approximately surround the end portion of the first outrigger 345. The CNT 350 can be formed at a boundary portion of the oval groove portion of the cathode electrode 330.

Preferably, each auxiliary electrode 340 of the FED device is formed as a single electrode and multiple auxiliary electrodes are electrically connected together.

The structure of the FED device in accordance with the first embodiment of the present invention will be described in detail as follows.

First, the gate electrode (data electrode) 310 is formed on the lower glass substrate, and the insulation layer 320 is formed on (over) the gate electrode 310. The cathode electrode (i.e., scan 3) 330 is formed on the insulation layer 320 to vertically cross the gate electrode 310.

The auxiliary electrode 340 is formed parallel to the cathode electrode 330 on the insulation layer 320. The end portion of the first outrigger 345 that extends from the auxiliary electrode 340 has the oval shape. The first groove portion of the cathode electrode 330 can also have a corresponding oval shape to approximately surround the oval end portion of the first outrigger 345. The width of the first outrigger 345 (including the end portion) is smaller than the width of the oval groove portion of the cathode electrode 330.

The auxiliary electrode 340 receives a positive voltage while the FED device is being driven (namely, while the scan electrodes are sequentially driven). Due to the electric fields generated by the auxiliary electrode 340, the efficiency of the FED device can be enhanced. In other words, the electric fields generated by the auxiliary electrode 340 excite the electrons emitted from the CNT 340, to thus enhance luminance. In addition, when the FED device is not driven, a ground voltage or a negative voltage is applied to the auxiliary electrode 340 to restrain the CNT 150 from emitting electrons.

In the first embodiment of the present invention, because the CNT 350 is formed at the boundary portion of the first oval groove portion of the cathode electrode 330 surrounding the oval end portion of the first outrigger 345 of the auxiliary electrode 340, the electrons are concentrated toward the oval end portion of the first outrigger 345 of the auxiliary electrode 340. Namely, because electron beams do not spread externally out of the cell (the FED device) but spread uniformly, the electron beam distortion can be minimized and thus the display luminance and clarity of the FED device can be enhanced.

In addition, the existence of the first outrigger 345 of the auxiliary electrode 340 contributes to reduce the exposed area of the insulation layer 320 between the auxiliary electrode 340 and the cathode electrode 330, resulting in minimal electric charges being charged to or discharged from the insulation layer 320 and thus distortion of the electric field can be minimized.

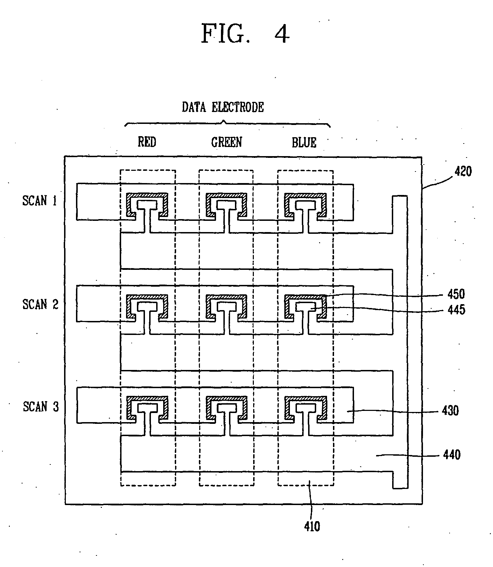

Figure 4 is a plan view of an FED (Field Emission Display) device in accordance with a second embodiment of the present invention.

As shown in Figure 4, an FED device in accordance with the second embodiment of the present invention comprises at least one gate electrode 410 and an insulation layer 420 sequentially formed on a lower glass substrate (not shown); at least one cathode electrode 430 positioned on the insulation layer 420, crossing the at least one gate electrode 410, and having at least one first groove portion; at least one auxiliary electrode 440 formed parallel to the cathode electrode 430 and having at least one first outrigger 445; and at least one carbon nano tube (CNT) 450 formed at a boundary portion of the first groove portion of the cathode electrode 430. That is, the first outrigger 445 extends from the auxiliary electrode 440 and is positioned in the first groove portion of the cathode electrode 430.

The end portion of the first outrigger 445 of the auxiliary electrode 440 can have a rectangular shape, and the first groove portion of the cathode electrode 430 also can have a corresponding rectangular shape in order to approximately surround the rectangular end portion of the first outrigger 445 of the auxiliary electrode 440. The CNT 450 is formed at the boundary portion of the first rectangular groove portion of the cathode electrode 430.

In the second embodiment of the present invention, because the CNT 450 is formed at the boundary portion of the first groove portion of the cathode electrode 430 surrounding the rectangular end portion of the first outrigger 445 of the auxiliary electrode 440, the electron beams are concentrated to the rectangular end portion of the first outrigger 445 of the auxiliary electrode 440. Therefore, because electron beams do not spread externally out of the cell but spread uniformly, the electron beam distortion can be minimized and thus the display luminance and clarity of the FED device can be enhanced.

In addition, the existence of the first outrigger 445 of the auxiliary electrode 440 contributes to reduce the exposed area of the insulation layer 420 between the auxiliary electrode 440 and the cathode electrode 430, resulting in minimized electric charges being charged to or discharged from the insulation layer 420 and thus distortion of the electric field can be minimized.

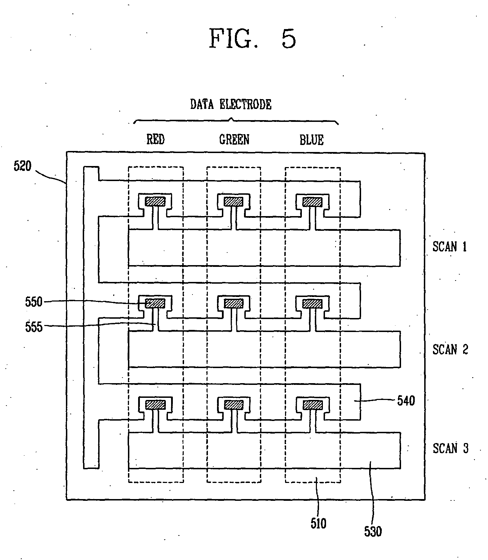

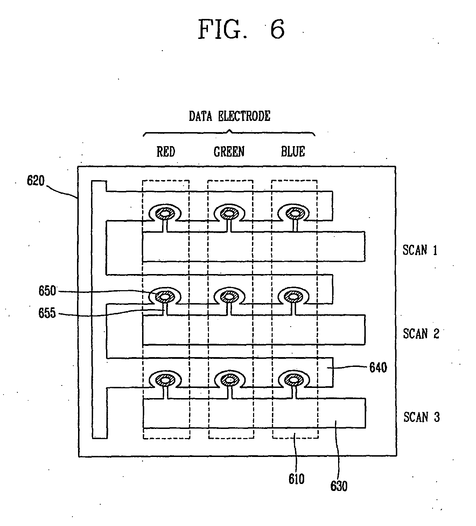

A different structure of the cathode electrode 330, 430 and the auxiliary electrode 340, 440 as shown in Figures 3 and 4 will be described in detail with reference to Figures 5 and 6 as follows.

An FED device in accordance with third and fourth embodiments of the present invention includes a cathode electrode 530, 630 having a second outrigger 555, 655 and an auxiliary electrode 540, 640 having a second groove portion for surrounding the second outrigger 515, 655.

Figure 5 is a plan view of an FED (Field Emission Display) device in accordance with the third embodiment of the present invention.

As shown in Figure 5, an FED device in accordance with the third embodiment of the present invention comprises: at least one gate electrode 510 and an insulation layer 520 sequentially formed on a lower glass substrate (not shown); at least one cathode electrode 530 positioned on the insulation layer 520, crossing the at least one gate electrode 510 and having at least one second outrigger 555; at least one auxiliary electrode 540 formed parallel to the cathode electrode 530 and having a second groove portion; and at least one CNT 550 formed on the second outrigger 555 of the cathode electrode 530. The second outrigger 555 extends from the cathode electrode 530 and is positioned in the second groove portion of the auxiliary electrode 540.

An end portion of the second outrigger 555 of the cathode electrode 530 can have a rectangular shape and the second groove portion of the auxiliary electrode 540 also can have a corresponding rectangular shape to approximately surround the rectangular end portion of the second outrigger 555 of the cathode electrode 530.

The CNT 550 can be formed in a rectangular shape on the rectangular end portion of the second outrigger 555 of the cathode electrode 530. Herein, in order to generate more electrons from the CNT 550, preferably, the inside of the rectangular CNT 550 is empty, and the inside of the rectangular CNT 550 can also be filled. Because electron beams proceed from the CNT 150 toward the auxiliary electrode 540 surrounding the CNT 550, electron beams do not spread widely to neighboring cells.

Figure 6 is a plan view of an FED (Field Emission Display) device in accordance with a fourth embodiment of the present invention.

As shown in Figure 6, an FED device in accordance with the fourth embodiment of the present invention comprises: at least one gate electrode 610 and an insulation layer 620 sequentially formed on a lower glass substrate (not shown); at least one cathode electrode 630 positioned on the insulation layer 620, crossing the gate electrode 610 and having at least one second outrigger 655; an auxiliary electrode 640 formed parallel to the cathode electrode 630 and having at least one second groove portion; and at least one CNT 650 formed on the second outrigger 655 of the cathode electrode 630. The second outrigger 655 extends from the cathode electrode 630 and is positioned in the second groove portion of the auxiliary electrode 640.

An end portion of the second outrigger 655 of the cathode electrode 630 can have an oval shape and the second groove portion of the auxiliary electrode 640 also can have a corresponding oval shape to approximately surround the oval end portion of the second outrigger 655 of the cathode electrode 630.

The CNT 650 can be formed in an oval shape on the oval end portion of the second outrigger 655 of the cathode electrode 630. Herein, in order to generate more electrons from the CNT 650, preferably, the inside of the oval CNT 650 is empty; however the inside of the rectangular CNT 650 can also be filled. Because electron beams proceed from the CNT 650 toward the auxiliary electrode 640 surrounding the CNT 650, electron beams do not spread widely to neighboring cells.

As so far described, the FED device in accordance with the present invention has many advantages.

That is, for example, by forming the cathode electrode having the groove portion or the outrigger (a type of protrusion), the auxiliary electrode having the groove portion or the outrigger, and the CNT on the boundary portion of the groove portion of the cathode electrode or the outrigger of the cathode electrode, distortion of electron beams generated from the FED can be minimized.

Also, electron beams can be concentrated into a cell (the FED device) and the phenomenon of cross talk (interference) being generated among neighboring cells can be minimized. Namely, by concentrating electron beams into the cell, the luminance of the FED device can be enhanced.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A field emission display (FED) device comprising:
a gate electrode and an insulation layer sequentially formed on a substrate;
a cathode electrode positioned on the insulation layer, crossing the gate electrode, and having a first groove or a first protrusion;
an auxiliary electrode formed parallel to the cathode electrode and having a second groove or a second protrusion; and
a carbon nano tube (CNT) formed at a boundary portion of the first groove of the cathode electrode or on the second protrusion of the cathode electrode.

2. The device of claim 1, wherein the second protrusion of the auxiliary electrode is positioned in the first groove of the cathode electrode.

3. The device of claim 1, wherein the second protrusion extends from the auxiliary electrode and the first groove of the cathode electrode approximately surrounds an end portion of the second protrusion of the auxiliary electrode.

4. The device of claim 1, wherein the first groove of the cathode electrode has an oval shape.

5. The device of claim 4, wherein the CNT is formed at the boundary portion of the first oval groove of the cathode electrode.

6. The device of claim 1, wherein an end portion of the second protrusion of the auxiliary electrode has an oval shape.

7. The device of claim 1, wherein each auxiliary electrode is formed as a single electrode and electrically connected together.

8. The device of claim 1, wherein the first groove of the cathode electrode has a rectangular shape.

9. The device of claim 8, wherein the CNT is formed at a boundary portion of the first rectangular groove of the cathode electrode.

10. The device of claim 1, wherein an end portion of the second protrusion of the auxiliary electrode has a rectangular shape.

11. The device of claim 1, wherein the first protrusion of the cathode electrode is positioned in the second groove of the auxiliary electrode.

12. The device of claim 1, wherein the first protrusion extends from the cathode electrode and the second groove of the auxiliary electrode approximately surrounds the end portion of the first protrusion of the cathode electrode.

13. The device of claim 1, wherein the second groove of the auxiliary electrode has a rectangular shape.

14. The device of claim 1, wherein the end portion of the first protrusion of the cathode electrode has a rectangular shape.

15. The device of claim 14, wherein the CNT is formed on the end portion of the first protrusion of the cathode electrode.

16. The device of claim 15, wherein the CNT is formed in a rectangular shape on the first rectangular protrusion of the cathode electrode.

17. The device of claim 15, wherein the inside of the rectangular CNT is filled or empty.

18. The device of claim 1, wherein the second groove of the auxiliary electrode has an oval shape.

19. The device of claim 1, wherein an end portion of the first protrusion of the cathode electrode has an oval shape.

20. The device of claim 19, wherein the CNT is formed on the end portion of the first protrusion.

21. The device of claim 20, wherein the CNT is formed in an oval shape on the end portion of the first protrusion of the cathode electrode.

22. The device of claim 21, wherein the inside of the oval CNT is filled or empty.

23. The device of claim 1, wherein the second groove of the auxiliary electrode approximately surrounds the end portion of the first protrusion of the cathode electrode.

24. The device of claim 23, wherein the end portion of the first protrusion of the cathode electrode has a rectangular or oval shape.

25. The device of claim 24, wherein the CNT is formed in a rectangular or in an oval shape on the end portion of the first protrusion of the cathode electrode.

26. The device of claim 1, wherein the width of the first protrusion of the cathode electrode is smaller than the width of the end portion of the first protrusion.

27. The device of claim 1, wherein the width of the second protrusion of the auxiliary electrode is smaller than the width of the end portion of the second protrusion.

28. A field emission display (FED) device comprising:
a gate electrode and an insulation layer sequentially formed on a substrate;
a cathode electrode positioned on the insulation layer, crossing the gate electrode, and having a groove portion;
an auxiliary electrode formed parallel to the cathode electrode and having an protrusion formed in the groove portion; and
a carbon nano tube (CNT) formed at a boundary portion of the groove portion of the cathode electrode,
wherein an end portion of the protrusion of the auxiliary electrode has a rectangular or an oval shape and the groove portion of the cathode electrode also has a corresponding rectangular or oval shape.

29. The device of claim 28, wherein the groove portion of the cathode electrode substantially surrounds the end portion of the protrusion of the auxiliary electrode.

30. A field emission display (FED) device comprising:
a gate electrode and an insulation layer sequentially formed on a substrate;
a cathode electrode positioned on the insulation layer, crossing the gate electrode, and having an protrusion;
an auxiliary electrode formed parallel to the cathode electrode and having a groove portion; and
a carbon nano tube (CNT) formed on the protrusion of the cathode electrode,
wherein an end portion of the protrusion of the cathode electrode has a rectangular or an oval shape and the groove portion of the auxiliary electrode also has a corresponding rectangular or oval shape.

31. The device of claim 30, wherein the groove portion of the auxiliary electrode substantially surrounds the end portion of the protrusion of the cathode electrode.

32. The device of claim 30, wherein the CNT is formed in a rectangular or oval form on the end portion of the protrusion of the cathode electrode.

33. The device of claim 30, wherein the inside of the oval or rectangular CNT is filled or empty.
